# EUROPEAN PATENT SPECIFICATION

(11) **EP 0 491 201 B1**
(45) Date of publication and mention of the grant of the patent: **06.09.1995**
(21) Application number: 91120516.9
(22) Date of filing: 29.11.1991
(51) Int. Cl.: H02P 7/42

(54) **Method for producing the speed reference for a crane motor**
Verfahren zur Erstellung der Geschwindigkeitsreferenz für einen Kranmotor
Procédé de production d'une référence de vitesse pour un moteur de grue

(30) Priority: 17.12.1990 FI 906228
(43) Date of publication of application: 24.06.1992
(73) Proprietor: KCI Konecranes International Corporation, 05830 Hyvinkää (FI)
(72) Inventor: Kiiski, Tapani, SF-05830 Hyvinkää (FI)
(74) Representative: Zipse + Habersack

(56) References cited:
- DE-A- 3 924 940
- GB-A- 2 171 863
- US-A- 3 670 851

## Description

The invention relates to a method for forming the speed reference for a crane motor as defined in the introductory part of claim 1.

One way of controlling the lifting and traversing motions of a crane is to use push-button controllers to give control commands. When the motor driving the crane is fed via a converter, the push-button controllers are used to give the converter a motor speed reference, on the basis of which the converter adjusts the motor speed to the desired value. A previously known system for controlling the motor speed via push button controllers is presented in publication GB A 2171863 (Int. Cl. H02P 7/42), which provides for each direction of motion a two-position push-button to determine both the direction and speed of the motion as well as its change. The first push-button position determines the direction of rotation of the motor and the acceleration to the crawling speed or the maintenance of the speed already reached, while the second position causes the motor to accelerate until the maximum allowed speed is reached. When the button is released, the motor speed is reduced at a constant rate of deceleration.

When this type of two-position push-button control is used in connection with a traversing motor, its speed of rotation is accelerated to the maximum in about three seconds. This is generally sufficient for the operator to be able to adjust the motor speed by returning the button to the first position to maintain the speed attained. In the case of the lifting motions, however, the acceleration and deceleration times are shorter, typically 0.5 - 1.5 s. In a practical situation, it is difficult to adjust the speed because it is determined on the basis of a short push-button activation time. In the case of the shortest, 0.5 s acceleration times, this means that if the motor is to be operated e.g. at 1/3 of its maximum speed, the push-button will have to be held at the 2nd step for about 0.2 s and then returned to the 1st step. Thus, the operator cannot have a direct feel of the speed reference, by contrast e.g. to the so-called joy-stick control where the joy-stick position is proportional to the speed reference.

The object of the present invention is to eliminate the drawbacks referred to above and to provide a method for producing the motor speed reference in a way allowing the crane operator to select the desired speed. This is achieved in the manner defined in the characterization part of claim 1. Other embodiments of the invention are presented in the subclaims.

The invention allows the rotational speed of the motor to be easily adjusted while maintaining a good feel of the quantity controlled, i.e. the lifting or lowering speed of the load. The device used by the operator to control the crane motions can still remain essentially simple and requires no changes to its earlier construction. Thus, the invention can be implemented in an economically advantageous manner.

In the following, the invention is described in detail by the aid of examples of its embodiments by referring to the drawings attached, in which
Fig. 1 represents a speed control system implemented using push-button control, applicable in the present invention,
Fig. 2 presents the flow chart of the procedure of the invention,
Fig. 3 presents the timing diagram of the control procedure of the invention.

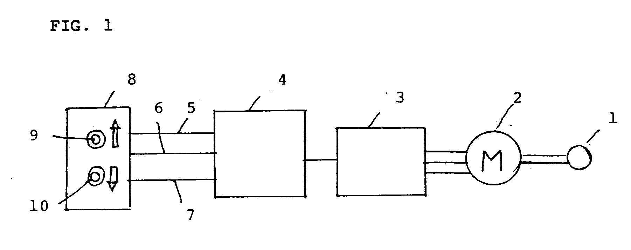

The diagram in Fig. 1 represents a crane motor drive in which the lifting apparatus 1 is driven by a motor 2 controlled by an inverter 3. As far as the invention is concerned, the implementation of the motor control is irrelevant. It is possible to use other types of motor and control equipment in which a speed reference is applied to adjust the motor speed to a suitable level. The inverter is controlled by a control unit 4, which produces the control quantities on the basis of external commands and internal program data. The control unit 4 has three control inputs, of which inputs 5 and 6 are used to determine the direction of the lifting motion and input 7 to determine the positive change in the speed reference, i.e. the acceleration. The control signals are entered by means of a two-position push-button controller 8 provided with separate push-buttons 9 and 10 for the up and down directions. The buttons are so interlocked that they cannot be depressed simultaneously.

The principle of operation of the control apparatus is as follows. To control the lifting apparatus 1, the operator presses button 9 or 10 to its first position. This produces a control signal at control input 5 or 6, determining the direction of motion of the lifting apparatus. In the 1st position of the push-button, an initial acceleration takes place, i.e. the motor is accelerated to a certain minimum speed. Pressing the push-button to its second position produces a signal at input 7 that causes the control unit to accelerate the motor, i.e. to change the time derivative of the speed reference in a manner determined by software. Therefore, no acceleration command can be issued unless one of the direction commands is valid at the moment. The motor speed increases as long as the push-button is held in the second position, until a predetermined maximum speed is reached. When the push-button is returned to the first position, the control system maintains the speed attained. When the push-button is completely released, the control unit 4 causes the motor drive to decelerate in a predetermined manner until zero speed is reached, unless other control commands are given.

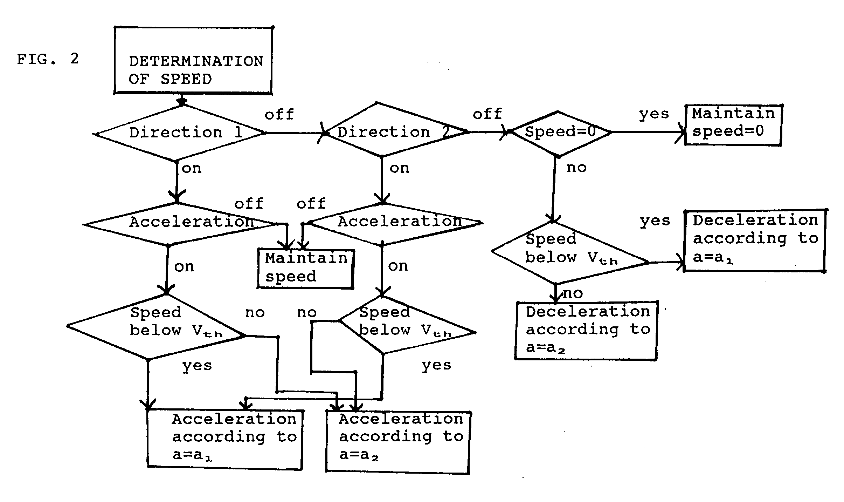

For the procedure of the invention, the flow chart in Fig. 2 applies. When one of the push-buttons is in its 1st position and the direction thus determined, pressing the button to its second position produces at the corresponding control input a signal for changing the speed reference as a function of time. If the speed reference is lower than a certain limit speed Vₜₕ, the speed is changed so that the time derivative of the speed equals a₁, for which a value has been selected which is sufficiently small to give the operator enough time to react to the change in the speed and stop accelerating the motion at the desired point. If the speed reference is above the limit value on the basis of earlier control or exceeds it during the current control action, the acceleration is increased in a stepwise manner to a higher value a₂. The acceleration will now remain at the same value as long as the button is in position 2.

The deceleration can be controlled in a corresponding manner. For speeds above the limit speed Vₜₕ, the deceleration is higher, and for speeds below that, lower. The deceleration values in different speed ranges may have either the same magnitudes or different magnitudes than the corresponding acceleration values.

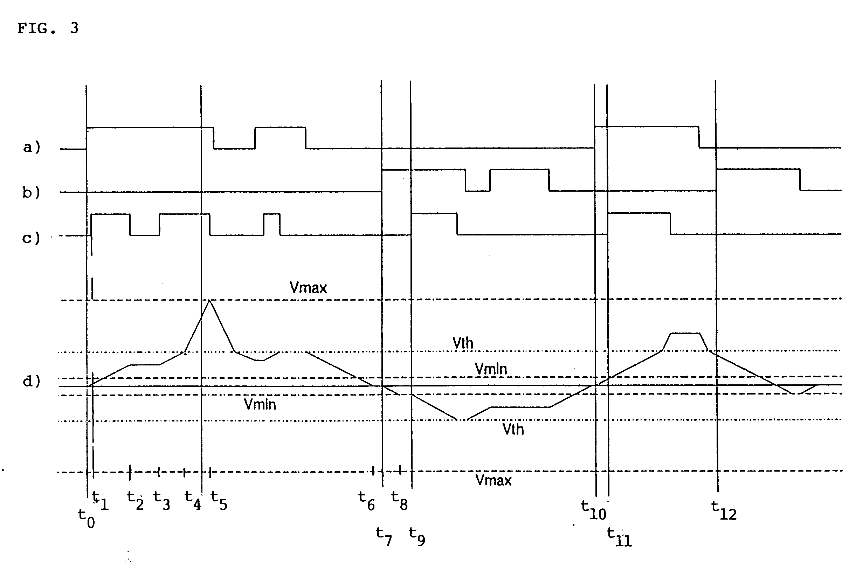

Fig. 3 presents the timing diagram of the control procedure of the invention. Curves a) - c) represent the control signals generated on the basis of the push-button positions. Curve d) represents the change of speed as a function of time.

At instant t₀, the up-button is pressed to position 1, causing the system to perform the initial acceleration. In the time interval t₁ - t₂ the motor is accelerated at rate a₁, for which in this example a value equal to the initial acceleration has been chosen. In the time interval t₂ - t₃ the push-button is again in position 1, so the speed remains unchanged. During the next acceleration phase, the speed first reaches the value Vₜₕ at acceleration rate a₁, whereupon the acceleration rate changes to a₂ and remains at this value until the maximum speed is reached. If the push-button is released, the control unit reduces the motor speed in a corresponding manner until zero speed is reached. In the other direction of motion, the speed control is accomplished on the same principle. In the time interval t₈ - t₉ the motor is running at the minimum speed as only a direction command applies. At instant t₁₂ the direction of motion is reversed by an appropriate control signal, causing the control unit first to decelerate the motor to zero speed in accordance with the normal deceleration program.

In the embodiment described, the acceleration and decelaration are changed in a stepwise manner and remain constant between the steps. However, the change of acceleration and deceleration can also be implemented in other ways, e.g. as a suitable function of speed. The change can also be implemented as a function of time, in which case the beginning of the time is most appropriately counted as starting from the instant when the push-button is pressed to or released from position 2, i.e. from the start of acceleration or deceleration. The implementation of a control unit that will achieve the features characteristic of the procedure belongs to the normal sphere of expertise of a person skilled in the art and is not described here in detail.

In the foregoing, the invention has been described by referring to some of its embodiments. However, this presentation should not be regarded as restricting the invention, but the embodiments of the invention may be varied within the scope of the following claims.

## Claims

1. Method for producing the speed reference for a crane motor when the converter (4) feeding the motor (2) is controlled by at least one controller (8) which, to allow the speed reference to be changed, has a control position in which the speed reference is changed as a function of time, the acceleration stage comprising an initial acceleration and a subsequent control stage following the initial acceleration,
characterized in
that during the control stage above a speed reference value vth the time derivative (a₁,a₂) of the speed reference of the motor is changed, whereby vₘᵢₙ < vₜₕ < vₘₐₓ.

2. Procedure according to claim 1, in which, when the controllers (8) are in the open position, the speed reference for the motor (2) is reduced down to zero speed, **characterized** in that the time derivative (a₁,a₂) of the motor speed reference is changed during the deceleration of the motor.

3. Procedure according to claim 1 or 2, **characterized** in that, for a lower speed, a motor speed reference time derivative (a₁,a₂) with a smaller absolute value is used than for a high speed, and that, at a given limit speed, the absolute value of the time derivative (a₁,a₂) is changed in a stepwise manner.

4. Procedure according to claim 1 or 2, **characterized** in that the time derivative (a₁,a₂) of the speed reference is changed as a function of the motor speed.

5. Procedure according to any one of claims 1 - 3, **characterized** in that the time derivative (a₁,a₂) of the speed reference is changed as a function of time starting from the beginning of a given acceleration or deceleration phase.

## Patentansprüche

1. Verfahren zum Generieren des Drehzahlsollwertes für einen Kranmotor, wenn der Wandler (4) zum Speisen des Motors (2) durch zumindest eine Steuerung (8) gesteuert wird, welche zum Ermöglichen einer Drehzahlsollwertänderung eine Steuerungsposition hat, in welcher der Drehzahlsollwert als Funktion der Zeit geändert wird, wobei die Beschleunigungsphase eine anfängliche Beschleunigung und eine darauf folgende Steuerungsphase aufweist, die der anfänglichen Beschleunigung nachfolgt,
dadurch **gekennzeichnet,**
daß während der Steuerungsphase oberhalb eines Drehzahlsollwertes Vₜₕ die zeitliche Ableitung (a₁, a₂) des Drehzahlsollwertes des Motors geändert wird, wobei Vₘᵢₙ < Vₜₕ < Vₘₐₓ.

2. Verfahren nach Anspruch 1,
bei dem, wenn die Steuerungen (8) sich in einer unbetätigten Position befinden, der Drehzahlsollwert für den Motor (2) auf Null reduziert wird,
dadurch **gekennzeichnet,**
daß die zeitliche Ableitung (a₁, a₂) des Drehzahlsollwertes während des Abbremsens des Motors geändert wird.

3. Verfahren nach Anspruch 1 oder 2,
dadurch **gekennzeichnet**,
daß für eine geringe Geschwindigkeit eine zeitliche Ableitung (a₁, a₂) des Drehzahlsollwertes mit einem geringeren absoluten Wert verwendet wird als für eine hohe Geschwindigkeit, und daß bei einer gegebenen Grenzdrehzahl der Absolutwert der zeitlichen Ableitung (a₁, a₂) stufenweise geändert wird.

4. Verfahren nach Anspruch 1 oder 2,
dadurch **gekennzeichnet,**
daß die zeitliche Ableitung (a₁, a₂) des Drehzahlsollwertes als Funktion der Motorgeschwindigkeit geändert wird.

5. Verfahren nach einem der Ansprüche 1 bis 3,
dadurch **gekennzeichnet**,
daß die zeitliche Ableitung (a₁, a₂) des Drehzahlsollwertes als Funktion der Zeit geändert wird, beginnend mit dem Start einer gegebenen Beschleunigungs- oder Abbremsphase.

## Revendications

1. Procédé de production de la référence de vitesse pour un moteur de grue lorsque le convertisseur (4) alimentant le moteur (2) est commandé par au moins un organe de commande (8) qui possède, pour permettre de changer la référence de vitesse, une position de commande dans laquelle la référence de vitesse change en fonction du temps, le stade d'accélération comprenant une accélération initiale et un stade de commande subséquente à la suite de l'accélération initiale,
caractérisé en ce que, pendant le stade de commande au-dessus d'une valeur de référence de vitesse Vₜₕ, la dérivée en fonction du temps (a₁,a₂) de la référence de vitesse du moteur est changée, de sorte que Vₘᵢₙ < Vₜₕ < Vₘₐₓ.

2. Procédé suivant la revendication 1, dans lequel, lorsque les organes de commande (8) sont dans la position ouverte, la référence de vitesse pour le moteur (2) est réduite jusqu'à une vitesse nulle, caractérisé en ce que la dérivée en fonction du temps (a₁,a₂) de la référence de vitesse du moteur est changée pendant la décélération du moteur.

3. Procédé suivant la revendication 1 ou 2, caractérisé en ce que, pour une plus faible vitesse, on utilise une dérivée de la référence de vitesse de moteur en fonction du temps (a₁,a₂) ayant une valeur absolue plus petite que dans le cas d'une grande vitesse, et en ce que, à une vitesse limite donnée, la valeur absolue de la dérivée en fonction du temps (a₁,a₂) est changée par paliers.

4. Procédé suivant la revendication 1 ou 2, caractérisé en ce que la dérivée de la référence de vitesse en fonction du temps (a₁,a₂) est changée en fonction de la vitesse du moteur.

5. Procédé suivant une quelconque des revendications 1 à 3, caractérisé en ce que la dérivée de la référence de vitesse en fonction du temps (a₁,a₂) est changée en fonction du temps à partir du début d'une phase d'accélération ou décélération donnée.
